# EUROPÄISCHE PATENTSCHRIFT

(11) **EP 1 959 545 B1**
(45) Veröffentlichungstag und Bekanntmachung des Hinweises auf die Patenterteilung: **05.10.2011**
(21) Anmeldenummer: 08157729.8
(22) Anmeldetag: 13.12.2000
(51) Int. Cl.: H02K 15/12, H01F 41/12

(54) **Einrichtung zum Imprägnieren einer Isolation eines Wicklungsstabes einer elektrischen Maschine**
Device to impregnate an insulation on a winding bar of an electric machine
Dispositif d'imprégnation d'une isolation d'une tige d'enroulement d'une machine électrique

(30) Priorität: 23.12.1999 DE 19962290
(43) Veröffentlichungstag der Anmeldung: 20.08.2008
(62) Teilanmeldung aus: 00990730.4
(73) Patentinhaber: Alstom Technology Ltd, 5400 Baden (CH)
(72) Erfinder: Klee, Peter, 69309 Mannheim (DE)

(56) Entgegenhaltungen:
- JP-A- 1 008 846
- JP-A- 8 163 839
- JP-A- 57 013 728
- JP-A- 61 214 750
- US-A- 2 783 171

## Beschreibung

Die Erfindung betrifft eine Einrichtung zum Imprägnieren einer Isolation eines Wicklungsstabes nach dem Oberbegriff des Anspruch 1.

Eine derartige Einrichtung ist aus der EP 0 831 575 A1 bekannt. Dort ist der Behälter eine Form, in die der Wicklungsstab eingelegt ist. Die mit einem Deckel verschließbare Form ist in einem Evakuierungsbehälter angeordnet, damit bei geöffnetem Deckel ein Vakuum im Behälter aufrecht erhalten werden kann. Der Deckel bleibt während dem Einspeisen des Imprägniermittels geöffnet. Erst nach Erreichen eines vorgebbaren Füllstandes wird der Deckel in Schließstellung gebracht. Ferner erfordert der Evakuierungsbehälter einen großen Platzbedarf. Insgesamt gesehen ergibt sich ein komplizierter Werkzeugaufbau und Prozessablauf.

JP 612 14 750 offenbart eine Einrichtung gemäß dem Oberbegriff des Anspruch 1.

Es stellt sich die Aufgabe eine Einrichtung der eingangs genannten Art anzugeben, die mit weniger Aufwand eine schnellere Durchdringung der Isolation mit Imprägniermittel bringt.

Gelöst wird diese Aufgabe erfindungsgemäß durch die Merkmale des Patentanspruchs 1.

Weitere Ausgestaltungen der erfindungsgemäßen Lösungen sind in den Unteransprüchen angegeben.

Anhand von Beispielen und der schematischen Zeichnungen Fig. 1 bis 6 wird die Einrichtung beschrieben.

Dabei zeigt:
- Fig. 1: eine Seitenansicht eines Wicklungsstabes mit den Anschlüssen für Vakuumbildung und Imprägniermittel,
- Fig. 2: ein Schnitt entlang der Linie II-II der Fig. 1,
- Fig. 3: einen Querschnitt durch eine Einrichtung zur Imprägnierung mehrerer Wicklungsstäbe,
- Fig. 4: einen Querschnitt durch eine andere Ausbildung,
- Fig. 5: einen Querschnitt durch einen Wicklungsstab mit den erfindungsgemäßen Werkzeug
- Fig. 6: einen Querschnitt durch ein Mehrfachwerkzeug.

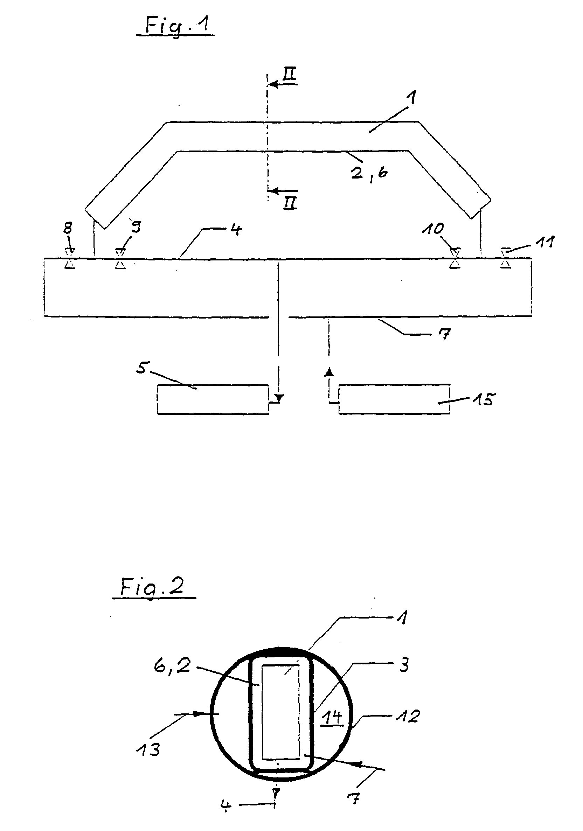

Die Fig. 1 und 2 zeigen einen Wicklungsstab 1 einer Statorwicklung einer nicht dargestellten elektrischen Maschine. Durch Umwicklung mit einem Isolierband entsteht eine Isolation 2. Mit einer als Schlauch oder Schrumpfschlauch ausgebildeten flexiblen Hülle 3 aus vakuum- und druckdichtem Material ist der Wicklungsstab 1 über seine ganze Länge überzogen. Eine Leitung 4 verbindet eine vakuumbildende Anlage 5 mit dem Innenraum 6 der flexiblen Hülle 3, wobei der Innenraum im Wesentlichen mit dem Raum gleichzusetzen ist, den die Isolation 2 einnimmt. Eine Zufuhrleitung 7 für als Imprägniermittel verwendetes Harz verbindet einen Tank 15 zur Aufnahme des Harzes mit dem besagten Innenraum 6. In der Leitung 4 und in der Zufuhrleitung 7 sind jeweils 2 Ventile 8, 9 und 10, 11 angeordnet. Eine druckfeste Hülle 12 umfasst die vakuum- und druckdichte Hülle 3, die von der Leitung 4 und der Zufuhrleitung 7 durchsetzt ist. Ein Druckübertragungsmedium, wie zum Beispiel Pressluft, gelangt über eine Druckleitung 13 in den Raum 14 zwischen der vakuum- und druckdichten Hülle 3 sowie der druckfesten Hülle 12.

Zur Vorbereitung des Imprägniervorganges der Isolation 2 erfolgt nach der Evakuierung des Innenraumes 6 der flexiblen Hülle 3 über die Leitung 4 das Aufbringen eines vorgebbaren Druckes im Raum 14 zwischen den beiden Hüllen 3 und 12. Nach dem Schließen der in der Leitung 4 befindlichen Ventile 8, 9 und nach dem Öffnen der in der Zufuhrleitung 7 angeordneten Ventile 10, 11 wird Imprägnierharz aus dem Tank 15 in die Isolation 2 injiziert. Der Einspeisedruck ist dabei stets kleiner als der in der druckführenden Hülle 12 herrschende Druck. Die Differenz zwischen diesen beiden Druckwerten entspricht dem Druck, mit dem die imprägnierte Isolation 2 gepresst beziehungsweise verdichtet wird. Die Imprägnierung ist beendet, wenn alle Hohlräume der evakuierten Isolation gefüllt sind.

Neben geometrischen Faktoren sind für die technisch interessante Imprägnierzeit die Parameter Imprägnierharzviskosität, sowie Imprägnierdruck entscheidend. Da nur die Harzmenge, die tatsächlich in die Stabisolation eindringt, am Prozess beteiligt ist, braucht keine Rücksicht auf die Harzstabilität genommen zu werden. Das bedeutet, dass die Imprägniertemperatur wesentlich höher (bis zirka 120 Grad Celsius) liegen kann als bei der bekannten Tauchtechnik, bei der in einer Imprägnierwanne eine große Menge Harz vorgehalten werden muss. Diese hohe Imprägniertemperatur bewirkt eine extrem niedrige Anfangsviskosität des Harzes und damit einen sehr schnellen Imprägniervorgang. Des weiteren kann der Imprägnierdruck ebenfalls relativ hoch (zirka 10 bar) gewählt werden, so dass auch von daher eine wesentlich schnellere Imprägnierung erfolgen kann. Damit wird die Zeitdauer des Imprägnierprozesses erheblich reduziert.

Bei Verwendung von warm- bzw. heißhärtenden Imprägnierharzen ist eine Erwärmung des Stabes beziehungsweise der Stabisolation erforderlich. Hierzu kann die direkte Heizung des Wicklungsstabes und damit der imprägnierten Wicklungsstabisolation mittels Strom gewählt werden. Werden bei Raumtemperatur gehärtete Harze gewählt, kann ein Isolierband eingesetzt werden, das die dafür geeigneten beschleunigend wirkenden Additive enthält.

Während des Imprägnierprozesses wird der Überdruck in der druckfesten Hülle 12 bis zur Gelierung und Härtung des Imprägnierharzes aufrecht erhalten. Die druckfeste Hülle 12 kann beispielsweise aus einem flexiblen gewebeverstärktem Schlauch oder aus angepassten segmentierten beziehungsweise verflanschten Druckrohren bestehen. Nach Abschluss des Imprägniervorganges wird bei geschlossenen Ventilen 8, 9, 10, 11 und nach Aufhebung des Überdruckes in der Hülle 12 diese Hülle entfernt und der Wicklungsstab 1 zusammen mit der Hülle 3 entnommen. Nach dem auch die Hülle 3 entfernt ist, kommt der Wicklungsstab zu seinem bestimmungsgemäßen Einsatz.

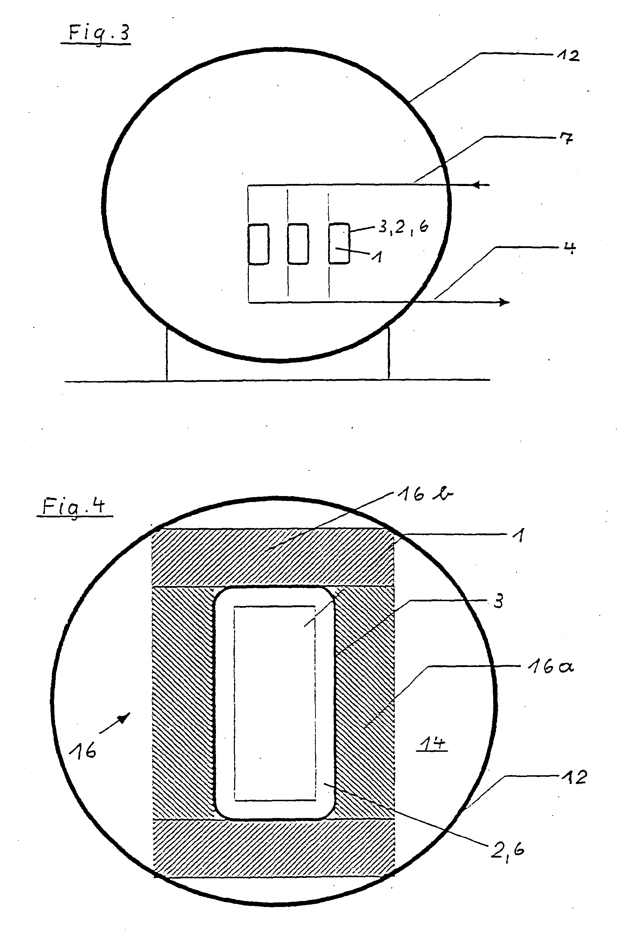

Die Fig. 3 zeigt ein Beispiel, bei dem drei Wicklungsstäbe 1 gleichzeitig imprägniert werden. Von der Leitung 4 zweigen dabei mehrere Stichleitungen ab, so dass alle Wicklungsstäbe 1 gleichzeitig evakuiert werden können. Auch von der Zufuhrleitung 7 führt das Harz zweigend in drei Stichleitungen ab, um eine gleichzeitige Harzeinleitung zu ermöglichen. Als druckfeste Hülle 12 ist bei diesem Beispiel ein Autoklav eingesetzt.

Bei in einem Stator einzusetzenden Wicklungsstäben 1 ist für den sogenannten Nutteil des Wicklungsstabes in der Regel eine hohe mechanische Querschnittsgenauigkeit erforderlich. Fig. 4 zeigt einen Querschnitt durch den Nutteil des Wicklungsstabes 1 mit einem formschlüssig die Hülle 3 umfassenden Kalibrierkörper 16, der im Raum 14 zwischen den Hüllen 3 und 12 angeordnet ist. Der Kalibrierkörper 16 ist aus einzelnen Formstücken 16 a, 16 b zusammengesetzt und gewährleistet die Passgenauigkeit des Nutteils.

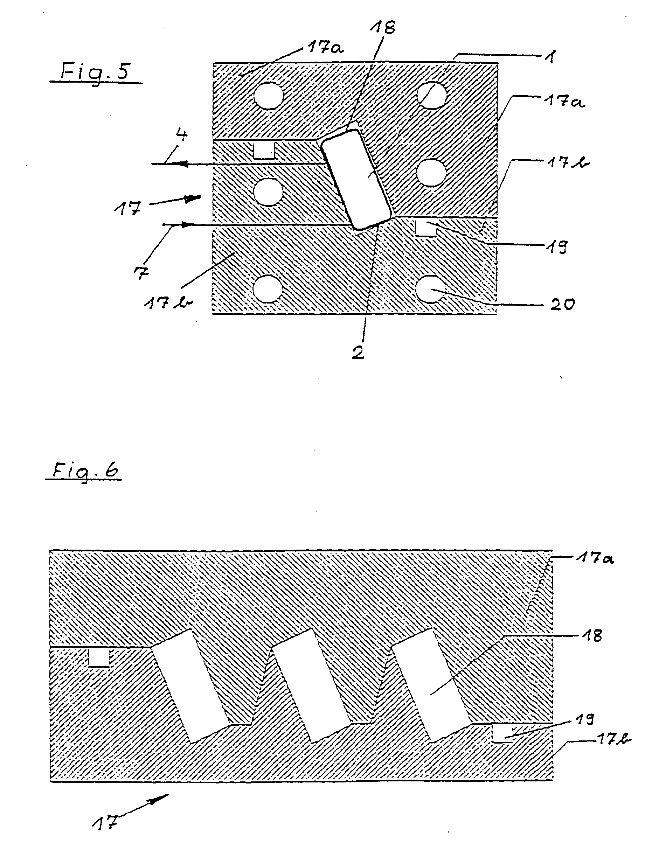

Fig. 5 zeigt ein Ausführungsbeispiel der Erfindung.

Gemäß Fig. 5 ist ein Werkzeug 17 vorgesehen, das in einem Werkzeugnest 18 den mit der Isolation 2 versehenen Wicklungsstab 1 formschlüssig aufnimmt. Das Werkzeug 17 besteht aus einem Oberteil 17 a und einem Unterteil 17 b, die unter Zwischenschaltung einer umlaufenden Dichtung 19 durch eine nicht dargestellte Schraubverbindung kraftschlüssig miteinander verbunden sind. Die durch das Werkzeugnest 18 gebildete Kammer umschließt die Isolation 2 des Wicklungsstabes 1 unter Einhaltung eines vorgebbaren Spiels. Nach erfolgter Evakuierung der Kammer mit Hilfe der Leitung 4 wird über die Zufuhrleitung 7 das Imprägnierharz eingespeist, bis die Isolation und deren Hohlräume imprägniert sind. In Kanälen 20 sind Heiz- oder Kühlsysteme zur Unterstützung des Imprägnier- oder Aushärtevorganges angeordnet. Das Werkzeug 17 ist während dem Evakuieren und während dem Befüllen mit Imprägnierharz vollständig geschlossen, so dass der Austritt von Emissionen vermieden wird.

Die Fig. 6 zeigt ein Werkzeug 17 mit mehreren Werkzeugnestern 18, so dass eine entsprechende Anzahl von nicht dargestellten Wicklungsstäben gleichzeitig evakuiert und imprägniert werden können. Ober- und Unterteil 17 a, 17 b sind auch hier unter Zwischenschaltung einer umlaufenden Dichtung 19 kraftschlüssig miteinander verbunden.

## Patentansprüche

1. Einrichtung zum Imprägnieren einer Isolation (2) eines Wicklungsstabes (1) einer elektrischen Maschine, mit
einem den Wicklungsstab aufnehmenden Behälter, der mit einem ein Imprägniermittel enthaltenden Tank (15) verbunden ist,
wobei der Innenraum des Behälters mit einem Vakuum belegbar ist und das Imprägniermittel mit einem vorgebbaren Druck in den Behälter einfliesst,
wobei der Behälter ein aus mehreren Teilen zusammengesetztes, den Wicklungsstab (1) beim Evakuier- und Imprägniervorgang formschlüssig umgebendes Werkzeug (17) ist,
wobei mit dem Innenraum des Werkzeuges eine Leitung (4) einer
vakuumbildenden Anlage (5) verbunden ist, wobei
das Werkzeug (17) aus einem Oberteil (17a) und
einem Unterteil (17b) besteht, die unter Zwischenschaltung einer umlaufenden Dichtung (19) durch eine Schraubverbindung kraftschlüssig miteinander verbunden sind, **dadurch gekennzeichnet, dass** Heiz- oder Kühlsysteme zur Unterstützung des Imprägnier- oder Aushärtevorganges in Kanälen (20) des Werkzeugs (17) angeordnet sind.

2. Einrichtung nach Anspruch 1, **dadurch gekennzeichnet, dass** der Wicklungsstab (1) als Stromheizung ausgelegt ist, wobei der Widerstand des Stabes ein Mass für dessen Temperatur darstellt.

3. Einrichtung nach Anspruch 1, **dadurch gekennzeichnet, dass** bei Raumtemperatur härtende Harze als Imprägniermittel verwendet sind.

4. Einrichtung nach Anspruch 1, **dadurch gekennzeichnet, dass** als Isolation Isolierbänder verwendet werden, die beschleunigend wirkende Additive enthalten.

5. Einrichtung nach Anspruch 1, **dadurch gekennzeichnet, dass** die Kanäle (20) von löchern in den Teilen des Werkzeugs festgelegt sind.

## Claims

1. Device for impregnation of the insulation (2) of a winding bar (1) of an electrical machine, having a container which holds the winding bar and is connected to a tank (15) which contains impregnation means, in which case a vacuum can be applied to the interior of the container and the impregnation means flows into the container at a predeterminable pressure, the container being a tool (17) which is composed of a plurality of parts and surrounds the shape of the winding bar (1) during the evacuation and impregnation process, a line (4) from a vacuum-forming installation (5) being connected to the interior of the tool, the tool (17) consisting of a top part (17a) and a bottom part (17b), which, with the interposition of a circumferential seal (19), are connected to one another with a force fit by a screwed connection, **characterized in that** heating or cooling systems for assisting the impregnation or curing process are arranged in channels (20) of the tool (17).

2. Device according to Claim 1, **characterized in that** the winding bar (1) is in the form of an electrical heater, with the resistance of the bar representing a measure of its temperature.

3. Device according to Claim 1, **characterized in that** resins which cure at room temperature are used as impregnation means.

4. Device according to Claim 1, **characterized in that** insulating strips which contain additives with an accelerating effect are used as insulation.

5. Device according to Claim 1, **characterized in that** the channels (20) are determined by holes in the parts of the tool.

## Revendications

1. Dispositif pour imprégner une isolation (2) d'une barre d'enroulement (1) d'une machine électrique, comprenant
un récipient qui accueille la barre d'enroulement, lequel est relié avec un réservoir (15) qui contient un produit d'imprégnation,
l'espace intérieur du récipient pouvant être mis sous vide et le produit d'imprégnation s'écoulant vers l'intérieur du récipient avec une pression qui peut être prédéfinie,
le récipient étant un outil (17) assemblé à partir de plusieurs parties qui entoure la barre d'enroulement (1) par engagement géométrique lors de l'opération de mise sous vide et d'imprégnation,
une conduite (4) d'un équipement (5) de mise sous vide étant reliée avec l'espace intérieur de l'outil, l'outil (17) se composant d'une partie supérieure (17a) et d'une partie inférieure (17b), lesquelles sont reliées ensemble par adhérence à l'aide d'un assemblage vissé avec interposition d'une garniture d'étanchéité (19) périphérique,
**caractérisé en ce que** des systèmes de chauffage ou de refroidissement sont disposés dans des canaux (20) de l'outil (17) pour assister l'opération d'imprégnation ou de durcissement.

2. Dispositif selon la revendication 1, **caractérisé en ce que** la barre d'enroulement (1) est réalisée sous la forme d'un chauffage électrique, la résistance de la barre représentant une mesure de sa température.

3. Dispositif selon la revendication 1, **caractérisé en ce que** les produits d'imprégnation utilisés sont des résines qui durcissent à température ambiante.

4. Dispositif selon la revendication 1, **caractérisé en ce que** des bandes isolantes qui contiennent des additifs à effet accélérateur sont utilisées comme isolation.

5. Dispositif selon la revendication 1, **caractérisé en ce que** les canaux (20) sont définis par des trous dans les parties de l'outil.
